# EUROPÄISCHE PATENTANMELDUNG

(11) **EP 1 914 685 A2**
(43) Veröffentlichungstag der Anmeldung: **23.04.2008**
(21) Anmeldenummer: 07020047.2
(22) Anmeldetag: 12.10.2007
(51) Int. Cl.: G06T 17/40

(54) **Bildliche Darstellung dreidimensionaler Datensätze**

(30) Priorität: 16.10.2006 DE 102006048834
(71) Anmelder: Rust, Georg-Friedemann, Dr., 82131 Gauting (DE)
(72) Erfinder: Rust, Georg-Friedemann, Dr., 82131 Gauting (DE)
(74) Vertreter: Grünecker, Kinkeldey, Stockmair & Schwanhäusser Anwaltssozietät

(57) **Zusammenfassung**

Die Erfindung betrifft ein Verfahren zur bildlichen Darstellung eines dreidimensionalen Messdatensatzes, welches das Erstellen des dreidimensionalen Messdatensatzes mithilfe einer computertomographischen oder kernspintomographischen Vorrichtung, Verarbeiten einer ersten Teilmenge des dreidimensionalen Messdatensatzes für eine Bildwiedergabe in einer ersten bildlichen Darstellung in einer ersten Darstellungsebene, und Verarbeiten zumindest einer zweiten Teilmenge des dreidimensionalen Messdatensatzes für eine Bildwiedergabe in zumindest einer zweiten bildlichen Darstellung in zumindest einer zweiten Darstellungsebene, wobei zumindest ein Wert zumindest eines Orientierungsparameters zur Festlegung der Orientierung der zumindest einen zweiten Darstellungsebene bezüglich der ersten Darstellungsebene mittels einer Steuereinrichtung auswählbar ist, umfasst.

## Beschreibung

Die Erfindung betrifft ein Verfahren zur bildlichen Darstellung eines dreidimensionalen Messdatensatzes. Die Erfindung betrifft insbesondere eine Vorrichtung und ein Verfahren zur virtuellen Endoskopie, wie insbesondere der virtuellen Koloskopie.

### Hintergrund der Erfindung

Die bildliche Darstellung dreidimensionaler Messdaten ist eine allgemeine wichtige Aufgabe der computergestützten Datenanalyse und -aufbereitung. Bildgebende Verfahren sind insbesondere im medizinischen Bereich von wachsender Bedeutung. Hierbei können Röntgen-, Radio-, Kerspintomographie-Aufnahmen etc. zu diagnostischen Zwecken ausgewertet werden.

Ein Anwendungsbeispiel betrifft die Spiegelung des Dickdarms (Kolon), die sogenannte Koloskopie, die herkömmlich mit einem hierfür speziell entwickelten Endoskope, dem Koloskop, erfolgt. Ein solches Koloskop umfasst ein optisches System, das i.d.R. mit einem Bildschirm verbunden ist, um einem Arzt eine Diagnose zu ermöglichen. Die Einführung des Koloskops in den Darmbereich wird von vielen Patienten als unangenehm oder gar schmerzhaft empfunden, und es besteht immer die Gefahr, insbesondere bei Entzündungen der Darmwand, dass mit dem Koloskop die Darmwand durchstoßen wird.

Als Alternative wurde daher die virtuelle Koloskopie entwickelt, bei der kein physikalisches Koloskop in den Körper des Patienten eingeführt werden muss. Stattdessen werden anstelle von Koloskopen die Verfahren und Vorrichtungen der Computertomographie/Kernspintomographie verwendet, um Messdaten aufzunehmen und diese Daten optisch darzustellen. Die Entwicklung der virtuellen Koloskopie wurde maßgeblich dadurch unterstützt, dass die Durchführung von aufwendigen Bildverarbeitungsverfahren wegen der hohen Rechenleistung neuerer Computer mittlerweile problemlos möglich ist.

Für die virtuelle Koloskopie wird eine große Zahl von parallelen Schnitten ortsaufgelöst mit einer Tomographieeinrichtung aufgenommen. Jedem dieser Schnitte entspricht ein Satz zweidimensionaler Bilddaten. Diese Sätze werden rechnergestützt in einen dreidimensionalen Messdatensatz umgewandelt. Aus dem dreidimensionalen Messdatensatz können wiederum zweidimensionale Bilddaten berechnet werden, die unabhängig von der Schnittausrichtung bei der eigentlichen Messung sind, z.B. schräg dazu. Die zwei- und dreidimensionalen Bilddaten werden in der Regel auf zweidimensionalen Wiedergabeeinrichtungen (Monitor, Foto, etc) wiedergegeben, und zwar als Schnittbilder (d.h. alle abgebildeten Bildpunkte entstammen einer Schnittebene) oder als quasi-dreidimensionale Bilder, die einen räumlichen Eindruck auf ähnliche Weise vermitteln, wie eine herkömmliche Fotographie (die abgebildeten Bildpunkte entstammen nicht sämtlich ein und derselben Ebene).

Es ist hierzu zu bemerken, dass a priori keine Festlegungen gemacht werden können, welche der Ansichten für eine möglichst aussagekräftige Diagnose am besten geeignet ist. Obwohl die räumlichen (quasi-dreidimensionalen) Darstellungen wegen des vermittelten räumlichen Eindrucks sehr anschaulich sind und dadurch hilfreich für die Orientierung sind, können aber gerade in diesen Darstellungen Krankheitsbefunde wie Läsionen etc. durch Gewebe (z.B. eine Darmfalte) verdeckt werden und dadurch nicht sichtbar sein. In Schnittbildern kommen dagegen solche Verdeckungen nicht vor, allerdings sind sie bei der Ausführung einer Behandlung, die für gewöhnlich eine Koordination in drei Raumrichtungen erfordert, wenig hilfreich.

In der deutschen Patentanmeldung DE 10246355 A1 ist ein Verfahren und eine Vorrichtung zur gleichzeitigen bildlichen Darstellung von Messdaten, die von einem Dickdarm aufgenommen wurden, in mehreren, zwei- und dreidimensionalen, Ansichten offenbart. In einer der Ansichten kann eine Markierung vorgenommen werden, deren Relativlage in den anderen Ansichten angezeigt wird. Die automatische Orientierung der einzelnen bildlichen Darstellungen zueinander ist jedoch fest vorgegeben, wodurch eine schnelle, einfach handhabbare und beliebige Änderung der Blickrichtung, insbesondere, der relativen Lage der Schnittebenen von einer der Darstellungen zu einer anderen, nicht möglich ist. Dieses ist jedoch aus diagnostischen Gründen und hinsichtlich der Marktakzeptanz einer solchen Vorrichtung höchst wünschenswert.

### Beschreibung der Erfindung

Angesichts der oben beschriebenen Probleme ist es eine Aufgabe der Erfindung, Verfahren und Vorrichtungen bereitzustellen, mit denen die geschilderten Nachteile der virtuellen Koloskopie vermieden werden können.

Diese Aufgabe wird durch das Verfahren von Anspruch 1 und das Bildverarbeitungs- und Bildwiedergabesystem mit den Merkmalen von Anspruch 18 gelöst. Vorteilhafte Weiterbildungen werden in den abhängigen Ansprüchen angegeben.

Wiewohl die Erfindung speziell mit Hinsicht auf die virtuelle Koloskopie entwickelt wurde und im Hinblick auf dieses Anwendungsgebiet beschrieben wird, versteht es sich, dass sich die Grundgedanken der Erfindung auf jeden beliebigen dreidimensionalen Datensatz anwenden lassen. Mögliche weitere Anwendungsgebiete in der Medizin sind sämtliche Arten der virtuellen Endoskopie, andere Tomographieverfahren, Ultraschalluntersuchungsmethoden, Röntgenuntersuchungen mit Tracerstoffen, etc. Ein besonders wichtige weitere Anwendung betrifft die virtuelle Bronchoskopie. Die Erkennung von Lungenkarzinomen sowie der Metastisierung in Lymphknoten kann auf der Grundlage des hier offenbarten Verfahrens gegenüber dem Stand der Technik verbessert werden.

Das erfindungsgemäße Verfahren zur bildlichen Darstellung eines dreidimensionalen Messdatensatzes, umfasst die Schritte:
Erstellen des dreidimensionalen Messdatensatzes mithilfe einer computertomographischen oder kernspintomographischen Vorrichtung;
Verarbeiten einer ersten Teilmenge des dreidimensionalen Messdatensatzes für eine Bildwiedergabe in einer ersten bildlichen Darstellung in einer ersten Darstellungsebene, und
Verarbeiten zumindest einer zweiten Teilmenge des dreidimensionalen Messdatensatzes für eine Bildwiedergabe in zumindest einer zweiten bildlichen Darstellung in zumindest einer zweiten Darstellungsebene, wobei zumindest ein Wert zumindest eines Orientierungsparameters zur Festlegung der Orientierung der zumindest einen zweiten Darstellungsebene bezüglich der ersten Darstellungsebene mittels einer Steuereinrichtung auswählbar ist.

Eine solche Steuereinrichtung bzw. ein solcher durch die selbe auswählbarer Orientierungsparameter ist in dem Stand der Technik nicht bekannt. Es wird einem Benutzer erfindungsgemäß ermöglicht, die Orientierung der Darstellungsebene(n) (Schnittebene) der zweiten bildlichen Darstellung(en) bequem und schnell zu wählen. Die zweite Darstellungseben wird im Allgemeinen von der ersten verschieden sein. Die zumindest eine zweite Teilmenge des Messdatensatzes, die für die zumindest eine zweite bildliche Darstellung verwendet wird, kann und wird im Allgemeinen zumindest einige Daten der ersten Teilmenge umfassen. Die erste Teilmenge kann durchaus auch aus dem gesamten dreidimensionalen Messdatensatz bestehen.

Der Messdatensatz kann insbesondere einen Teil eines menschlichen Körpers darstellen, der mithilfe der computertomographischen oder kernspintomographischen Vorrichtung aufgenommen wird. Dieser Teil des menschlichen Körpers kann insbesondere ein Organ, insbesondere der Darm sein. Die Lungen und Bronchien sowie Blutgefäße im Allgemeinen des menschlichen Körpers können ebenso durch den dreidimensionalen Datensatz repräsentiert sein.

Insbesondere wird es dem Benutzer ermöglicht, schnell mehrere zweite bildliche Darstellungen hintereinander ausgehend von der ersten bildlichen Darstellung anzeigen zu lassen, und sich so einen umfassenden Überblick über die betreffende dargestellte Region aus mehreren Blickwinkeln und -richtungen zu verschaffen, wodurch die Wahrscheinlichkeit, dass er z.B. eine Läsion übersieht, drastisch reduziert wird. Andererseits lässt sich die Umgebung einer bereits identifizierten Läsion schnell und bequem über Steuerung des Orientierungsparameters steuem. Der Orientierungsparameter kann allgemein Informationen über die Blickrichtung, über Blick- und Drehwinkel, beispielsweise in reellen Zahlen codiert enthalten.

Es versteht sich, dass, wenn genau eine zweite Teilmenge des Messdatensatzes in genau eine zweite bildliche Darstellung verarbeitet wird, die Darstellung in einer zweiten Darstellungsebene erfolgt. Mehrere zweite bildliche Darstellungen können in ein und der selben zweiten Darstellungsebene oder in unterschiedlichen zweiten Darstellungsebenen erfolgen.

Die erste und/oder die zumindest eine zweite bildliche Darstellung können insbesondere vorteilhafter Weise räumliche Darstellungen umfassen, die das räumliche Vorstellungsvermögen des Benutzers gut anzusprechen vermögen. Insbesondere kann die erste bildliche Darstellung eine Intraluminalansicht und die zumindest eine zweite bildliche Darstellung eine (Darm-) Wandansicht, d.h. den Fachleuten auf diesem Gebiet in der Regel vertraute Ansichten, sein. Vorteilhafterweise werden beispielsweise im Rahmen der virtuellen Koloskopie zwei bildliche zweite Darstellung angezeigt, von denen eine einen "Anterior Wall View" und die andere einen "Posterior Wall View", je nachdem, ob es sich um eine gegenüberliegende oder rückseitige Ansicht der Darmwand handelt, umfasst oder darstellt. Diese Ansichten entstehen, indem das Darmrohr virtuell parallel zur Längsachse aufgeschnitten wird und die Aufnahmen mit virtuellen Kameras gemacht werden, die senkrecht zur Längsachse ausgerichtet sind (s. auch unten).

Gemäß einem Beispiel stellt die erste bildliche Darstellung eine räumliche Ansicht, insbesondere eine Intraluminalansicht dar, und/oder die zumindest eine zweite bildliche Darstellung umfasst eine kombinierte räumliche und zweidimensionale Ansicht. Die zumindest eine zweite bildliche Darstellung stellt hierbei vorzugsweise eine dreidimensionale Wandansicht mit einer zweidimensionalen Darstellung des an der Außenwand angrenzenden Nachbar(Fett)-Gewebes dar. Die zweidimensionale und / oder die dreidimensionale Ansicht können hierbei definierte Graustufen enthalten. Durch eine derartige zweite bildliche Darstellung lässt sich insbesondere eine Infiltration eines Tumorgewebes von der Wandinnenseite aus in das angrenzende äußere Nachbargewebe hinein deutlich identifizieren. Vorteilhafterweise werden dem Benutzer eine solche Intraluminalansicht, eine kombinierte räumliche und zweidimensionale Ansicht in Form einer "Anterior Wall View" und eine kombinierte räumliche und zweidimensionale Ansicht in Form einer "Posterior Wall View" gleichzeitig präsentiert.

Der zumindest eine Orientierungsparameter kann insbesondere eine Schnittebene in der ersten bildlichen Darstellung und/oder einen Drehwinkel für die zumindest eine zweite bildliche Darstellung bestimmen. Beispielsweise kann die zumindest eine zweite bildliche Darstellung einen Schnitt senkrecht zu der Darstellungsebene der ersten bildlichen Darstellung darstellen, und es kann mithilfe des Orientierungsparameters eine Lage, Neigung oder Drehung der dargestellten Schnittebene gesteuert werden. Insbesondere kann, wenn die zumindest eine zweite bildliche Darstellung eine räumliche Darstellung ist, durch Drehung und Neigung ein vollständiger Eindruck eines dreidimensionalen Gebiets gewonnen werden.

Die Steuereinrichtung in den oben beschriebenen Weiterbildungen des erfindungsgemäßen Verfahrens kann eine Computermaus, insbesondere ein Scrollrad und/oder eine oder mehrere Tasten einer Computermaus, und/oder eine Computertastatur umfassen. Beispielsweise kann der Benutzer durch Scrollen des Scollrads den zumindest einen Orientierungsparameter auswählen. Durch gleichzeitiges Scrollen und Drücken einer Maustaste kann er z.B. eine Darstellungsebene drehen und kippen. Die Steuerung des Orientierungsparameters mithilfe einer Computermaus stellt eine besonders bequeme und schnelle Möglichkeit zur Verfügung, Darstellungsansichten kontrolliert zu verändern.

Der zumindest eine Orientierungsparameter kann auch durch Markieren mithilfe der Steuereinrichtung, beispielsweise mithilfe einer Computermaus, eines Bereichs oder eines Symbols einer, insbesondere der ersten bildlichen Darstellung überlagerten, Grafikdarstellung gewählt werden. Die Grafikdarstellung kann beispielsweise einen Kreis mit Gradeinteilung oder eine grafische Darstellung von Intervallen von Parameterwerten umfassen. Somit kann dem Benutzer eine einfache Möglichkeit der Auswahl des Orientierungsparameters zur Verfügung gestellt werden.

Andererseits kann es auch vorgesehen werden, den Orientierungsparameter durch Betätigen eines Scrollbars, insbesondere mithilfe einer Computermaus, auszuwählen, wie er in dem Stand der Technik der fensterbasierten Bildschirmanzeige bekannt ist. Natürlich kann auch eine Tastatur für die Auswahl eines Orientierungsparameters benutzt werden.

In einer alternativen Weiterbildung des erfindungsgemäßen Verfahrens umfasst die Steuereinrichtung einen Touchscreen, und der zumindest eine Orientierungsparameter ist durch Berühren des Touchscreens auswählbar, wodurch auch eine bequeme Steuerung/Auswahl des Orientierungsparameters durch die Bedienperson bereitgestellt wird.

In dem hierin offenbarten Verfahren kann jeder Wert eines Orientierungsparameters kontinuierlich oder diskret automatisch, insbesondere innerhalb eines vorbestimmten Parameterbereichs, durch die Steuereinrichtung variiert werden, so dass der zumindest eine Orientierungsparameter unterschiedliche Werte annimmt, und für jeden unterschiedlichen Wert des zumindest einen Orientierungsparameters kann zumindest eine zweite bildliche Darstellung angezeigt werden.

Somit kann der Orientierungsparameter z.B. als Startparameter gewählt werden, von dem ausgehend innerhalb eines bestimmten Parameterbereichs Werte automatisch eingestellt werden und die entsprechenden bildlichen Darstellung präsentiert werden. Unter kontinuierlicher Variation wird hierbei eine Parameteränderung in so kleinen Schritten verstanden, dass die Unterschiede von direkt aufeinanderfolgenden bildlichen Darstellungen nicht oder kaum wahrgenommen werden können. Eine diskrete Variation liegt bei einer Änderung von Parameterwerten in vorbestimmten Schritten (beispielsweise von einigen Grad) resultierend in deutlich von einander unterscheidbaren bildlichen Darstellungen vor.

Auch kann jeder Wert eines Orientierungsparameter kontinuierlich oder diskret gemäß Eingabe durch einen Benutzer, insbesondere innerhalb eines vorbestimmten Parameterbereichs, mittels der Steuereinrichtung auswählbar sein, und für jeden der unterschiedlichen ausgewählten Werte des zumindest einen Orientierungsparameters kann zumindest eine zweite bildliche Darstellung angezeigt werden.

Hierbei kann der Schritt des Auswählens jedes Wertes eines Orientierungsparameters die Schritte des Führens eines Bildschirm-Cursors, insbesondere eines Mauszeigers, in die zumindest eine zweite bildliche Darstellung zum Auswählen derselben und des Auswählens zumindest eines Wertes eines Orientierungsparameters, insbesondere eines Drehwinkels zur Drehung der Ansicht, mithilfe der Steuereinrichtung, insbesondere mittels eines Rads einer Computermaus, umfassen. Das Auswählen der zumindest einen zweiten bildlichen Darstellung kann auch nach Führen des Mauszeigers in die zumindest eine zweite bildliche Darstellung durch Betätigen einer oder mehrerer der Maustasten erfolgen.

Somit wird es dem Benutzer z.B. ermöglicht, mithilfe der Computermaus (oder alternativ beispielsweise mithilfe einer Tastatur) zumindest eine zweite bildliche Darstellung auszuwählen, beispielsweise durch Führen des Mauszeigers in diese Darstellung, und dann diese Darstellung gemäß einer Auswahl eines Wertes eines Orientierungsparameters zu ändern, insbesondere einen Drehwinkel für eine Wandansicht auszuwählen. Nachdem der Benutzer beispielsweise in einer ersten bildlichen Darstellung einen Tumorkandidaten identifiziert hat, kann er danach durch Drehen der zweiten bildlichen Darstellung diesen Tumorkandidaten aus verschiedenen Richtungen betrachten.

Die durch Variation des Orientierungsparameters aufeinander folgenden zweiten Darstellungen können jeweils an dem selben Ort eines Bildschirms angezeigt werden, in welchem Fall eine nachfolgende bildliche Darstellung nach Ausblenden der direkt vorhergehenden bildlichen Darstellung erfolgt.

Durch das Vorsehen eine Abfolge von zweiten bildlichen Darstellungen kann der Benutzer sich auf eine sehr schnelle und bequeme Weise über eine Anzahl von aufeinander folgenden bildlichen Darstellungen einen Überblick über die interessierende und zu diagnostizierende Region verschaffen.

In dem erfindungsgemäßen Verfahren kann zumindest eine dritte Teilmenge dreidimensionalen Messdatensatzes, die Teil der ersten Teilmenge sein kann oder diese umfassen kann, für eine Bildwiedergabe in zumindest einer dritten bildlichen Darstellung, insbesondere einer zweidimensionalen Darstellung, in zumindest einer dritten Darstellungsebene, die der ersten gleich sein kann, verarbeitet werden.

Die zumindest eine dritte bildliche Darstellung kann Graustufen aufweisen. Diese Graustufen können genauso gewählt werden, wie diejenigen in dem oben beschriebenen Beispiel der zumindest einen zweite Ansicht, die aus einer Kombination einer räumlichen und einer zweidimensionalen Darstellung entsteht.

Es können beispielsweise aus einem mittels virtueller Koloskopie ermittelten dreidimensionalen Datensatz Bilddaten für (zumindest) eine Schnittansicht in Form der dritten bildlichen Darstellung und Bilddaten für (zumindest) eine räumliche Ansicht in Form der ersten und/oder zweiten bildlichen Darstellung extrahiert werden, von denen erstere zum Nachweis einer Anomalie geeigneter ist (sind), während letztere das räumliche Vorstellungsvermögen besser anspricht (ansprechen). Vorzugsweise umfasst die zumindest eine dritte bildliche Darstellung eine axiale Ansicht und/oder eine frontale Ansicht und/oder eine sagittale Ansicht und/oder eine Schrägansicht (s. auch unten). Da von vorneherein kaum vorhergesagt werden kann, welche der Ansichten zur Diagnose am meisten geeignet ist, kann durch die Verwendung unterschiedlicher Ansichten, insbesondere mehrerer unterschiedlicher Schnittansichten und mehrerer unterschiedlicher räumlicher Ansichten eine zuverlässigere Diagnose getroffen werden.

Wenn eine der Ansichten eine solche Anomalie aufweist, so kann der anomale Bereich in dieser Darstellung z.B. mittels eines Mausklicks, eines Markierungspolygons, oder anderer Markierungsverfahren markiert werden. Nach dem Markieren wird automatisch berechnet, wo der markierte Bereich in der weiteren Darstellung bzw. wie er relativ zu der weiteren Darstellung (der ersten und/oder zweiten bildlichen Darstellung) liegt. Entsprechend kann in dem hierin offenbarten Verfahren zumindest ein in der wenigsten einen dritten bildlichen Darstellung abgebildeter Bildbereich markierbar sein, für die erste bildliche Darstellung die Lage oder Relativlage des zumindest einen markierten Bildbereichs berechnet werden und die Lage oder Relativlage des zumindest einen markierten Bildbereichs in der ersten Darstellung angezeigt werden. Die Relativlage gibt die Lage relativ zu der Ansicht an und kann, wenn der markierte Bereich in der dritten und ersten/zweiten bildlichen Darstellung zu sehen ist, einfach die Lage in der entsprechenden bildlichen Darstellung bezeichnen. Die Relativlage kann auch eine Lage hinter einem sichtbaren Merkmal in einer dreidimensionalen Ansicht andeuten.

Entsprechend kann zumindest ein in der wenigsten einen dritten bildlichen Darstellung abgebildeter Bildbereich markierbar sein, für die zweite bildliche Darstellung die Relativlage des zumindest einen markierten Bildbereichs berechnet werden und die Relativlage des zumindest einen markierten Bildbereichs in der zweiten Darstellung angezeigt werden.

Ist der in der dritten bildlichen Darstellung zumindest eine markierte Bereich auch in der ersten/zweiten Darstellung sichtbar abgebildet, so kann dies beispielsweise durch eine durchgezogene Umrandung, einen durchgezogenen Umkreis, etc. des entsprechenden Bildausschnitts in der ersten/zweiten Darstellung angezeigt werden. Ist der Bereich dagegen in der ersten/zweiten Darstellung durch Körpergewebe verdeckt oder liegt er im Fall von Schnittbildern oberhalb oder unterhalb der abgebildeten Ebene, so kann dies (die Relativlage) beispielsweise durch eine strichlinierte Markierung angezeigt werden. Dies hat ferner den Vorteile, dass mehrere Ärzte, beispielsweise mit unterschiedlicher Erfahrung, insbesondere aber solche aus unterschiedlichen Fachbereichen (z.B. Radiologen und Gastroenterologen), deren Standardarbeitsansichten oft verschieden sind, präziser miteinander kommunizieren können, da die Gefahr missverständlicher Diagnosen oder Interpretationen verringert wird. In den Auswirkungen führt dies zu verbesserter Zusammenarbeit zwischen den Ärzten und zu einer besseren und damit im Endeffekt auch zu einer kostengünstigeren Behandlung.

Hat die Markierung eine bestimmte geometrische Form, so ist es vorteilhaft, wenn diese in den verschiedenen bildlichen Darstellungen entsprechend den jeweiligen Blickrichtungen deformiert wird, so dass dem Betrachter ein perspektivischer Eindruck vermittelt wird.

Die verschiedenen bildlichen Darstellungen können beispielsweise gleichzeitig mit ein- und derselben Wiedergabeeinrichtung (z.B. Monitor) wiedergegeben werden, wobei sie alle in der selben Größe oder gemäß ihrer Signifikanz unterschiedlich groß wiedergegeben werden können.

In einer bevorzugten Weiterbildung des erfindungsgemäßen Verfahrens stellt eine der unterschiedlichen Darstellungen, insbesondere eine der dritten bildlichen Darstellungen, eine Topogramm-Ansicht (die unter Bezugnahme auf die beigefügte Figur näher beschrieben wird) dar, die einen optimalen Überblick über den untersuchten Bereich gibt und für die rechnergestützte Verfahren existieren, um den Darmverlauf automatisch zu visualisieren.

Dadurch kann im dargestellten Darmverlauf eine Position markiert werden, an dem eine Anomalie vermutet wird oder der aus anderen Gründen untersucht werden soll, worauf der entsprechend markierte Bereich bzw. seine Relativlage in der weiteren Darstellungen bzw. in den übrigen Darstellungen angezeigt werden.

In einer bevorzugten Weiterbildung erfolgt die Markierung manuell, beispielsweise über ein Eingabegerät wie einer Computer-Maus, einer Computer-Tastatur, durch Bildschirmberührung (Touchpad), etc. Alternativ oder ergänzend dazu kann das Markieren des abgebildeten Bildbereichs über automatisches Struktur- und/oder Texturerkennungsverfahren erfolgen, die anhand der speziellen Charakteristiken von Anomalien diese in einem Bild erkennen können.

In jeglichen Beispielen des erfindungsgemäßen Verfahrens kann der dreidimensionale Messdatensatz computertomographische oder kernspintomographische Aufnahmedaten zumindest eines Teils eines menschlichen oder tierischen Körpers, insbesondere einen Teil eines Organs oder Blutgefäßes umfassen.

Allgemein ist es zur Untersuchung von schlauchartigen Körpern, wie Röhren und Blutgefässen, einen dreidimensionalen Messdatensatz des schlauchartigen Körpers derart zu verarbeiten, dass eine bildliche Darstellung eine Wandansicht mit einer Blickrichtung erhalten wird, die parallel oder antiparallel zu dem Krümmungsvektor an der maximalen Krümmung der Mittellinie des schlauchartigen Körpers ist.

Somit kann in dem erfindungsgemäßen Verfahren der dreidimensionale Messdatensatz computertomographische oder kernspintomographische Aufnahmedaten zumindest eines Teils eines Hohlorgans, insbesondere des Darmes, oder einer Blutgefäßes umfassen, und zumindest eine der bildlichen Darstellungen, insbesondere die zumindest eine zweite bildliche Darstellung, kann eine Wandansicht des Hohlorgans oder des Blutgefäßes sein, die aus einer Blickrichtung gesehen wird, die parallel oder antiparallel zu dem Krümmungsvektor an der maximalen Krümmung der Mittellinie des Hohlorgans oder des Blutgefäßes ist. Ausgehend von dieser (defaultmäßigen) Ansicht kann sodann die zumindest eine zweite bildliche Darstellung, wie oben beschrieben, gedreht werden (beispielsweise durch Auswahl eines Drehwinkels mithilfe des Rads einer Computermaus), um einen vollständigen Überblick über die interessierende Region leicht und schnell zu ermöglichen.

Eine derartige Mittellinie kann für einen schlauchartigen Körper i. d. R. auch dann noch definiert werden, wenn die Querschnitte des Körpers von der idealen Kreisform abweichen, wobei die Berechnung der einzelnen Punkte, die die Mittellinie definieren, derjenigen von Schwerpunkten entspricht.

Die Mittellinie stellt mathematisch eine mit der Bogenlänge s parametrisierte Raumkurve r(s) dar. An jedem Punkt der räumlichen Kurve zeigt der Tangenteneinheitsvektor die Richtung der Kurve in diesem Punkt an. Der Krümmungsvektor zeigt in die Richtung, in der sich der Tangenteneinheitsvektor ändert (der Krümmungsvektor steht somit senkrecht auf dem Tangenteneinheitsvektor). Der Krümmungsvektor berechnet sich aus der zweiten Ableitung der Raumkurve nach der Bogenlänge d² r(s)/ds² und sein Betrag wird als Krümmung der Kurve bezeichnet.

Die "maximale Krümmung" kann eine im mathematischen Sinne absolut maximale Krümmung sein, ist in der Regel aber jeweils die im mathematischen Sinne lokal maximale Krümmung (lokales Maximum), also eine Stelle, an der der Krümmungsvektor kürzer ist als in der unmittelbaren Umgebung.

Das oben beschriebene Verfahren ist allgemein äußerst hilfreich zur Untersuchung von schlauchartigen Körpern, die sich nicht gerade entlang einer Raumrichtung erstrecken, sondern (u. U. mehrfach) gekrümmt sind. Die Mittellinie eines solchen Körpers stellt eine gekrümmte Linie im Raum dar.

Bei gekrümmten schlauchartigen Körpern ergibt das Verfahren zumindest eine der folgenden Wandansichten: die Wandansicht des Bereichs der inneren Oberfläche des schlauchartigen Körpers, der in Längsrichtung am stärksten gekrümmt ist, und/oder die gegenüberliegende Wandansicht. Bei gebogenen Rohren sind dies die beispielsweise die gedehnten und/oder gestauchten Wandabschnitte, an denen das Material besonders belastet ist und die daher besonders anfällig für Defekte sind. Beim Darm oder Blutgefässen sind solche Bereiche starker Krümmung bis hin zu Knicken Abschnitte, an denen Erkrankungen nicht nur bevorzugt auftreten, sondern mit herkömmlichen Verfahren auch besonders schwer zu entdecken sind.

Das oben beschriebene erfindungsgemäße Verfahren und dessen bevorzugte Weiterbildungen lassen sich besonders gut auf dem Gebiet der virtuellen Endoskopie, insbesondere der virtuellen Koloskopie (aber auch in benachbarten Bereichen wie virtueller Bronchioskopie, Intestinoskopie, NHN-Endoskopie, Ventrikel-Endoskopie), einsetzen. Durch die interaktive Wechselwirkung zwischen den verschiedenen Darstellungen können die komplementären Vorteile verschiedener Darstellungen genutzt werden und somit die für jede spezielle Darstellung spezifischen Nachteile umgangen werden.

Es ist beispielsweise auch ein Einsatz des erfindungsgemäßen Verfahrens in der konventionellen Koloskopie möglich, da auch ein Ultraschallkopf an einem konventionellen Koloskop vergleichbare 3D-Datensätze liefert.

Die vorliegende Erfindung stellt auch ein Computerprogrammprodukt zur Verfügung, das ein oder mehrere computerlesbare Medien (Datenträger) mit von dem Computer ausführbaren Anweisungen zum Ausführen der Schritte eines der Verfahren von Anspruch 1 bis 17 umfasst.

Die oben genannte der Erfindung zugrunde liegende Aufgabe wird ferner gelöst durch ein Bildverarbeitungs- und Bildwiedergabesystem zur Durchführung eines der obigen Beispiele des erfindungsgemäßen Verfahrens, welches umfasst:
zumindest eine Einrichtung, die zum Verarbeiten einer ersten Teilmenge des dreidimensionalen Messdatensatzes für eine Bildwiedergabe in einer ersten bildlichen Darstellung in einer ersten Darstellungsebene, und zum
Verarbeiten zumindest einer zweiten Teilmenge des dreidimensionalen Messdatensatzes für eine Bildwiedergabe in zumindest einer zweiten bildlichen Darstellung in zumindest einer zweiten Darstellungsebene konfiguriert ist, und
eine Steuereinrichtung, konfiguriert zur Auswahl zumindest eines Werts zumindest eines Orientierungsparameters zur Festlegung der Orientierung der zumindest einen zweiten Darstellungsebene bezüglich der ersten Darstellungsebene.

Die Steuereinrichtung kann eine Computermaus, einen Touchscreen, eine Tastatur etc. umfassen. Das Bildverarbeitungs- und Bildwiedergabesystem kann weiterhin eine Einrichtung, um zumindest einen in einer der Darstellungen abgebildeten Bildbereich in dieser Darstellung zu markieren und eine Einrichtung, um die Relativlage des zumindest einen in der einen Darstellung markierten Bildbereichs für zumindest eine weitere Darstellung zu berechnen, umfassen.

Das Bildverarbeitungs- und Bildwiedergabesystem kann weiterhin eine computertomographischen oder kernspintomographischen Vorrichtung zum Erstellen des dreidimensionalen Messdatensatzes umfassen. Ebenso wird ein Bildverarbeitungs- und Bildwiedergabesystem wie oben genannt mit einem wie oben genannten Computerprogrammprodukt zur Verfügung gestellt.

Nachfolgend werden weitere Einzelheiten von Ausführungsformen der Erfindung anhand der beigefügten Figuren weiter erläutert. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Figur 1 zeigt nützliche Ansichten der virtuellen Kolloskopie, die einem Benutzer zeitgleich präsentiert werden.

Figur 2 veranschaulicht das Verfahren zur bildlichen Darstellung eines dreidimensionalen computertomographischen Messdatensatzes entsprechend einem Beispiel der vorliegenden Erfindung.

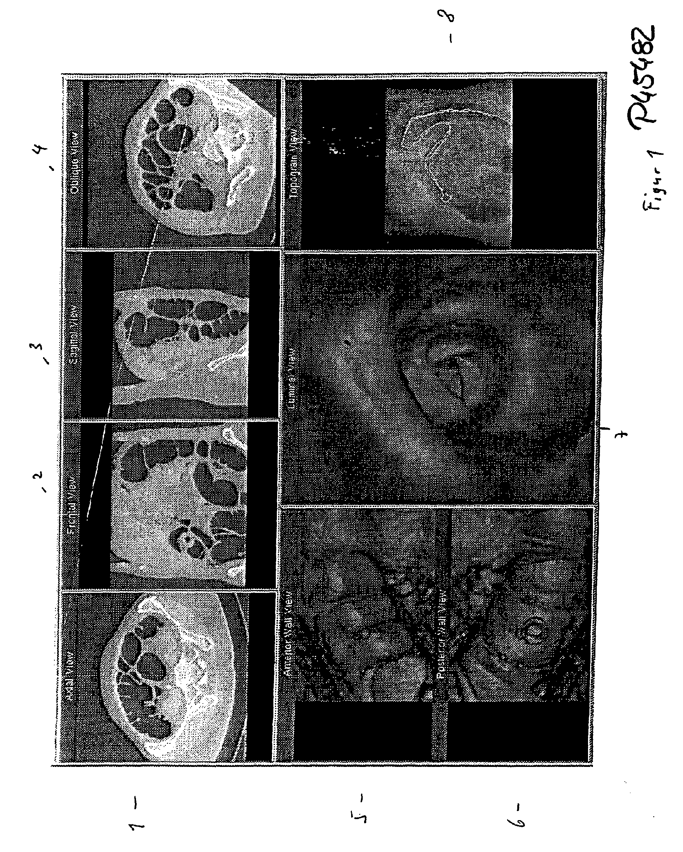

Figur 1 zeigt verschiedene Ansichten einer Darmregion, die einem Benutzer durch das erfindungsgemäße Verfahren präsentiert werden können. Die obere Reihe in Figur 1 zeigt vier zweidimensionale Ansichten, und zwar von links nach rechts der Reihe nach:
- eine axiale Ansicht oder "Axial View" 1, entsprechend einen Schnitt senkrecht zur Darmlängsachse,
- eine frontale Ansicht oder "Frontal View" 2,
- eine seitliche Ansicht oder "Sagittal View" 3, und
- eine schräge Ansicht oder "Oblique View" 4.

Die Schnittebenen der drei Schnittbilder 1, 2, 3 stehen senkrecht zueinander. Die Orientierung der schrägen Ansicht 4 ist beliebig. Ihre Flächennormale wird zweckmäßigerweise entsprechend einer Achse oder Vorzugsrichtung des zu untersuchenden Organs gelegt.

Das zweidimensionale Schnittbild 4 wird aus dem mithilfe eines Computertomographen erstellten dreidimensionalen Messdatensatzes berechnet, der wiederum aus einer Vielzahl von zweidimensionalen Messdatensätzen erstellt worden ist.

Die bildlichen Darstellungen 5 bis 8 stellen räumliche Ansichten dar und vermitteln so eine Übersicht über die untersuchte Körperregion.

Die Darstellungen 4 und 5 werden Wandansichten oder "Wall Views" genannt. Diese Bilder entstehen dadurch, dass das Darmrohr virtuell parallel zur Längsachse aufgeschnitten wird und die Aufnahmen mit virtuellen Kameras gemacht werden, die senkrecht zur Längsachse ausgerichtet sind. Man unterscheidet zwischen "Anterior Wall View" 5 und "Posterior Wall View" 6 und, je nachdem, ob es sich um eine gegenüberliegende oder rückseitige Aufnahme der Darmwand handelt.

Die beiden Ansichten 7 und 8 von Fig. 1 sind die für einen Internisten gewohnten Darstellungen. Zusammen mit der Erfahrung des Internisten vermitteln sie eine gewisse räumliche Vorstellung vom zu untersuchenden bzw. behandelnden Bereich.

Die Intraluminalansicht oder "Intraluminal View" 7 entspricht dem mit einer konventionellen Darmspieglung erhaltenen Bild vom Inneren des Darmrohrs, mit dem Unterschied, dass es mit einem virtuellen Koloskop erstellt wurde.

Die Topogramm-Ansicht oder "Topogram View" 8 schließlich entspricht vom Aussehen her einer herkömmlichen Röntgenaufnahme, wurde aber ebenfalls aus dem dreidimensionalen Datensatz des Tomographieverfahrens erstellt. Die in der Figur ersichtliche Schlangenlinie ist ein virtueller Weg durch den Dickdarm, der automatisch durch einen Computer generiert wird.

Fällt dem untersuchenden Arzt in einem der Bilder eine etwaige krankhafte Veränderung (Anomalie) an der Darmschleimhaut auf, so kann er in diesem Bild per Mausklick den entsprechenden Bereich auswählen und erhält in allen anderen Bildern die entsprechende Position, und zwar sowohl in den zweidimensionalen Schnittansichten, als auch in den räumlichen Darstellungen.

In letzteren erscheint eine Markierung, wenn die Anomalie, z.B. eine Läsion, für die virtuelle Kamera sichtbar ist, und eine gestrichelte Markierung, wenn sie für die virtuelle Kamera nicht sichtbar ist. So weiß der Internist, der den Befund eventuell behandeln muss, hinter welchem Gewebeteil (z.B. einer Darmfalte) der Befund verborgen ist. Besondere Bedeutung kommt den Ansichten "Intraluminal" bzw. "Topogram" zu, die dem Internisten vertraut sind, und die auch-was Überblick und Anschaulichkeit anbelangt - sehr gut der räumlichen Orientierung dienen.

Gemäß einer zu dem in den Figuren 5 und 6 gezeigten Beispiel alternativen bevorzugten Ausführungsform können die Wandansichten kombinierte zwei- und dreidimensionale Ansichten zeigen. Der aufgeschnittene Darmrohrbereich wird hierbei räumlich dargestellt. Das angrenzende Nachbargewebe wird lediglich zweidimensional mit Grauwerten gezeigt, die beispielsweise denen einer sagittalen oder axialen zweidimensionalen Schnittansicht entsprechen können. Die Schnitte werden zunächst entsprechend einer Blickrichtung erhalten, die parallel oder antiparallel zu dem Krümmungsvektor an der maximalen Krümmung der Mittellinie des Darmbereichs an einer bestimmten Stelle des Darms ist. Durch die Kombination der räumlichen aufgeschnittenen Ansicht des Darmrohrabschnitts mit der zweidimensionalen Darstellung des angrenzenden Gewebes kann insbesondere eine Infiltration des Fettgewebes um den Darm herum, d.h. außerhalb der Körperwand des Darms, mit hoher Verlässlichkeit erkannt werden.

Der Benutzer kann nun mit einem Mauszeiger auf eine der Wandansichten ("Anterior Wall View" oder "Posterior Wall View") zeigen und die entsprechende Ansicht dadurch auswählen. Sodann kann er die Schnittansicht mithilfe des Mausrads drehen, um einen vollständigen Überblick über die interessierende Region auf bequeme und schnelle Art zu erlangen. Während die Intraluminalansicht 7 der Identifikation eines Tumors (Tumorkandidatens) dienen kann, ermöglicht die aufeinanderfolgende Auswahl verschiedener Werte des Drehwinkels für eine Drehung der Schnittebene als eines Orientierungsparameters die bestmögliche Ansicht des Tumors (Tumorkandidatens). Anstelle der Computermaus kann eine entsprechende Eingabe mithilfe einer Tastatur, z.B. über die Pfeiltasten, erfolgen. Die Wandansichten mit der zweidimensionalen Darstellung des Nachbargewebes können somit beliebig orientiert sein.

Gemäß einer anderen Ausführungsform der Erfindung kann der Benutzer mit einem Mauszeiger in die Intraluminalansicht 7 "hineinklicken" und einen Schnitt senkrecht zu der Darstellungsebene am Ort des Mauszeigers darin festlegen. Es werden die Ansichten "Anterior Wall View" 5 und "Posterior Wall View" 6 dargestellt. Durch Scrollen des Mausrads können diese Ansichten entsprechend dem so variierten Orientierungsparameter kontinuierlich dahingehend geändert werden, dass unterschiedliche Schnitte, Neigungen der Schnittebenen und/oder Blickwinkel für den "Anterior Wall View" 5 und "Posterior Wall View" 6 ausgewählt werden.

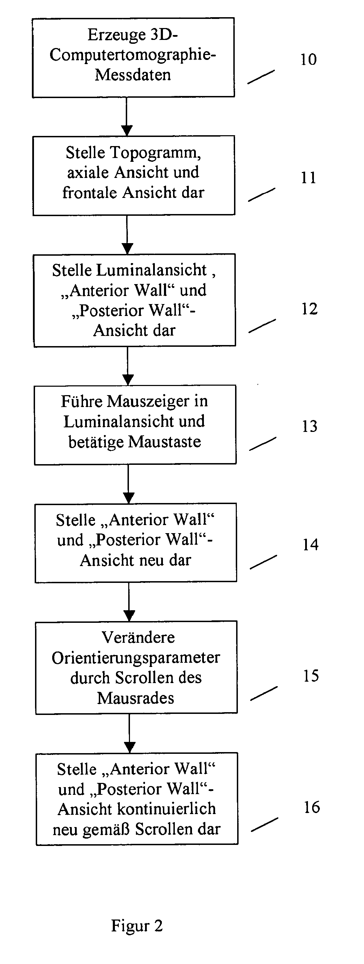

Figur 2 zeigt Verfahrensschritte zur bildlichen Darstellung von Messdaten, die mittels eines Orientierungsparameters kontrolliert wird. Zunächst werden dreidimensionale Messdaten, beispielsweise eines Dickdarmbereichs, mithilfe eines Computertomographen erzeugt 10. Es werden ein Topogramm, eine axiale und eine frontale Ansicht auf einem Bildschirm angezeigt 11. Des weiteren werden eine Luminalansicht, eine "Anterior Wall"- sowie eine "Posterior Wall"-Ansicht dargestellt 12.

Es kann vorgesehen sein, dass z.B. in der frontalen Ansicht ein Bildbereich durch einen Benutzer markiert wird und die markierte Stelle in den übrigen Ansichten entsprechend angezeigt wird. Der Benutzer sei nun an verschiedenen Darstellungen in verschiedenen Darstellungsebenen der hinteren und vorderen Darmwand interessiert. Gemäß der Erfindung kann er einfach mit einem Mauszeiger in die Intraluminalansicht hineinklicken 12 und eine Schnittebene auswählen, woraufhin eine neue Darstellung der Anterior Wall"- und "Posterior Wall"-Ansicht nach Maßgabe der gewählten Schnittebene innerhalb der Intraluminalansicht erfolgt 14. Durch Drehen des Rads der Computermaus (Scrollen) 15 kann sich der Benutzer verschiedene Darstellungsebenen für die Anterior Wall"- und die "Posterior Wall"-Ansicht anzeigen lassen 16. So kann er kontinuierlich auf schnelle und bequeme Weise verschiedene Darstellungsebenen durchscrollen. Ebenso kann es vorgesehen sein, dass er verschiedene Neigungswinkel und Drehungen der Darstellungsebene als Orientierungsparameter mithilfe der Computermaus, beispielsweise durch gleichzeitiges Scrollen und Betätigen einer Maustaste, auswählt.

## Patentansprüche

1. Ein Verfahren zur bildlichen Darstellung eines dreidimensionalen Messdatensatzes, umfassend:
Erstellen des dreidimensionalen Messdatensatzes mithilfe einer computertomographischen oder kernspintomographischen Vorrichtung;
Verarbeiten einer ersten Teilmenge des dreidimensionalen Messdatensatzes für eine Bildwiedergabe in einer ersten bildlichen Darstellung in einer ersten Darstellungsebene, und
Verarbeiten zumindest einer zweiten Teilmenge des dreidimensionalen Messdatensatzes für eine Bildwiedergabe in zumindest einer zweiten bildlichen Darstellung in zumindest einer zweiten Darstellungsebene, wobei zumindest ein Wert zumindest eines Orientierungsparameters zur Festlegung der Orientierung der zumindest einen zweiten Darstellungsebene bezüglich der ersten Darstellungsebene mittels einer Steuereinrichtung auswählbar ist.

2. Das Verfahren nach Anspruch 1, in dem die erste bildliche Darstellung und/oder die zumindest eine zweite bildliche Darstellung eine räumliche Darstellung umfasst.

3. Das Verfahren nach Anspruch 2, in dem die erste bildliche Darstellung eine räumliche Darstellung ist und/oder die zumindest eine zweite bildliche Darstellung eine Kombination einer zweidimensionalen und einer räumliche Darstellung umfasst.

4. Das Verfahren nach einem der vorangegangenen Ansprüche, in welchem der zumindest eine Orientierungsparameter die Lage und/oder Neigung einer Schnittebene in der ersten bildlichen Darstellung und/oder einen Drehwinkel für die zumindest eine zweite bildliche Darstellung bestimmt.

5. Das Verfahren nach einem der vorangegangenen Ansprüche, in welchem die Steuereinrichtung eine Computermaus, insbesondere ein Scrollrad und/oder eine oder mehrere Tasten einer Computermaus, und/oder eine Computertastatur umfasst.

6. Das Verfahren nach einem der vorangegangenen Ansprüche, in welchem der zumindest eine Orientierungsparameter durch Markieren mithilfe der Steuereinrichtung, insbesondere mithilfe einer Computermaus, eines Bereichs oder eines Symbols einer, insbesondere der ersten bildlichen Darstellung überlagerten, Grafikdarstellung gewählt wird.

7. Das Verfahren nach einem der vorangegangenen Ansprüche, in welchem der Orientierungsparameter durch Betätigen eines Scrollbars, insbesondere mithilfe einer Computermaus, gewählt wird.

8. Das Verfahren nach einem der vorangegangenen Ansprüche, in welchem die Steuereinrichtung einen Touchscreen umfasst, und der zumindest eine Orientierungsparameter durch Berühren des Touchscreens wählbar ist.

9. Das Verfahren nach einem der vorangegangenen Ansprüche, in welchem
jeder Wert eines Orientierungsparameters kontinuierlich oder diskret automatisch variiert wird, so dass der Orientierungsparameter unterschiedliche Werte annimmt, und
für jeden unterschiedlichen Wert eines Orientierungsparameters zumindest eine zweite bildliche Darstellung angezeigt wird.

10. Das Verfahren nach einem der Ansprüche 1 bis 8, in welchem
jeder Wert eines Orientierungsparameters kontinuierlich oder diskret gemäß Eingabe durch einen Benutzer, insbesondere innerhalb eines vorbestimmten Parameterbereichs, mittels der Steuereinrichtung auswählbar ist, und
für jeden unterschiedlichen ausgewählten Wert eines Orientierungsparameters zumindest eine zweite bildliche Darstellung angezeigt wird.

11. Das Verfahren nach Anspruch 10, worin der Schritt des Auswählens jedes Wertes eines Orientierungsparameters umfasst:
Führen eines Bildschirm-Cursors, insbesondere eines Mauszeigers, in die zumindest eine zweite bildliche Darstellung zum Auswählen derselben; und
Auswählen zumindest eines Wertes eines Orientierungsparameters, insbesondere eines Drehwinkels, mittels der Steuereinrichtung, insbesondere mittels eines Rads einer Computermaus.

12. Das Verfahren nach einem der vorangegangenen Ansprüche, weiterhin umfassend
Verarbeiten zumindest einer dritten Teilmenge des dreidimensionalen Messdatensatzes für eine Bildwiedergabe in zumindest einer dritten bildlichen Darstellung, insbesondere einer zweidimensionalen Darstellung, in zumindest einer dritten Darstellungsebene.

13. Das Verfahren nach Anspruch 12, in welchem die zumindest eine dritte bildliche Darstellung eine Schnittansicht, insbesondere eine axiale Ansicht und/oder eine frontale Ansicht und/oder eine sagittale Ansicht und/oder eine Schrägansicht ist.

14. Das Verfahren nach Anspruch 12 oder 13, in welchem
zumindest ein in der wenigsten einen dritten bildlichen Darstellung abgebildeter Bildbereich markierbar ist,
für die erste bildliche Darstellung die Relativlage des zumindest einen markierten Bildbereichs berechnet wird, und
die Relativlage des zumindest einen markierten Bildbereichs in der ersten Darstellung angezeigt wird.

15. Das Verfahren nach einem der Ansprüche 12 bis 14, in welchem
zumindest ein in der wenigsten einen dritten bildlichen Darstellung abgebildeter Bildbereich markierbar ist,
für die zumindest eine zweite bildliche Darstellung die Relativlage des zumindest einen in der dritten bildlichen Darstellung markierten Bildbereichs berechnet wird, und
die Relativlage des zumindest einen in der dritten bildlichen Darstellung markierten Bildbereichs in der zumindest einen zweiten Darstellung angezeigt wird.

16. Das Verfahren nach einem der vorangegangenen Ansprüche, bei welchem zumindest eine der bildlichen Darstellungen, insbesondere eine der dritten bildlichen Darstellungen, eine Topogramm-Ansicht ist.

17. Das Verfahren nach einem der vorangegangenen Ansprüche, bei welchem der dreidimensionale Messdatensatz computertomographische oder kernspintomographische Aufnahmedaten zumindest eines Teils eines menschlichen oder tierischen Körpers, insbesondere einen Teil eines Organs oder Blutgefäßes umfasst.

18. Das Verfahren nach einem der vorangegangenen Ansprüche, bei welchem der dreidimensionale Messdatensatz computertomographische oder kernspintomographische Aufnahmedaten zumindest eines Teils eines Hohlorgans, insbesondere des Darmes, oder eines Blutgefäßes umfasst, und
zumindest eine der bildlichen Darstellungen eine Wandansicht ist, die aus einer Blickrichtung gesehen wird, die parallel oder antiparallel zu dem Krümmungsvektor an der maximalen Krümmung der Mittellinie des Hohlorgans oder des Blutgefäßes ist.

19. Das Verfahren nach einem der Ansprüche 12 - 18, bei welchem das Markieren des abgebildeten Bildbereichs manuell und/oder mittels eines Struktur- und/oder Texturerkennungsverfahrens durchgeführt wird.

20. Das Verfahren nach einem der vorangegangenen Ansprüche zur Anwendung in der virtuellen Endoskopie, insbesondere der virtuellen Koloskopie.

21. Ein Computerprogrammprodukt, das ein oder mehrere computerlesbare Medien mit von dem Computer ausführbaren Anweisungen zum Ausführen der Schritte eines der Verfahren von Anspruch 1 bis 18 umfasst.

22. Ein Bildverarbeitungs- und Bildwiedergabesystem zur Durchführung eines Verfahrens nach einem Ansprüche 1 bis 20, umfassend:
zumindest eine Einrichtung, die zum Verarbeiten einer ersten Teilmenge des dreidimensionalen Messdatensatzes für eine Bildwiedergabe in einer ersten bildlichen Darstellung in einer ersten Darstellungsebene, und zum
Verarbeiten zumindest einer zweiten Teilmenge des dreidimensionalen Messdatensatzes für eine Bildwiedergabe in zumindest einer zweiten bildlichen Darstellung in zumindest einer zweiten Darstellungsebene konfiguriert ist, und
eine Steuereinrichtung, konfiguriert zur Auswahl zumindest eines Werts zumindest eines Orientierungsparameters zur Festlegung der Orientierung der zumindest einen zweiten Darstellungsebene bezüglich der ersten Darstellungsebene.

23. Das Bildverarbeitungs- und Bildwiedergabesystem von Anspruch 22, weiterhin umfassend
eine Einrichtung, die zur Markierung zumindest eines in einer der Darstellungen abgebildeten Bildbereichs konfiguriert ist, und
eine Einrichtung, die konfiguriert ist, die relative Lage des zumindest einen in der zumindest einen Darstellung markierten Bildbereichs für zumindest eine weitere Darstellung zu berechnen.

24. Das Bildverarbeitungs- und Bildwiedergabesystem von Anspruch 22 oder 23, weiterhin eine computertomographischen oder kernspintomographischen Vorrichtung zum Erstellen des dreidimensionalen Messdatensatzes umfassend.
